# EUROPÄISCHE PATENTSCHRIFT

(11) **EP 3 441 199 B1**
(45) Veröffentlichungstag und Bekanntmachung des Hinweises auf die Patenterteilung: **24.05.2023**
(21) Anmeldenummer: 18184453.1
(22) Anmeldetag: 19.07.2018
(51) Int. Cl.: B25J 5/00, B65G 1/137, B65G 57/00, B66F 9/06, B65G 61/00, G06Q 10/08

(54) **MOBILER KOMMISSIONIERROBOTER UND VERFAHREN ZUM BETREIBEN EINES MOBILEN KOMMISSIONIERROBOTERS**
MOBILE ORDER PICKING ROBOT AND METHOD FOR OPERATING A MOBILE ORDER PICKING ROBOT
ROBOT DE PRÉPARATION DE COMMANDE MOBILE ET PROCÉDÉ DE FONCTIONNEMENT D'UN ROBOT DE PRÉPARATION DE COMMANDE MOBILE

(30) Priorität: 08.08.2017 DE 102017118009
(43) Veröffentlichungstag der Anmeldung: 13.02.2019
(73) Patentinhaber: Linde Material Handling GmbH, 63743 Aschaffenburg (DE)
(72) Erfinder: GROH, Jonas, 63743 Aschaffenburg (DE); KRUMBHOLZ, Peter, 63869 Jakobsthal (DE)
(74) Vertreter: Patentship Patentanwaltgesellschaft

(56) Entgegenhaltungen:
- EP-A1- 0 235 488
- EP-A1- 3 263 491
- DE-A1-102013 019 368
- DE-A1-102015 220 091

## Beschreibung

Die Erfindung betrifft einen mobilen Kommissionierroboter zur Entnahme von Packstücken aus einem Warenlager und zum Packen dieser auf eine Lasttragvorrichtung mit einem Lasthandhabungsmanipulator, einem Lasttragmittel zum Erfassen des Packstücks, wobei das Lasttragmittel an dem Lasthandhabungsmanipulator angeordnet ist, mit einer Steuerung für den Lasthandhabungsmanipulator und das Lasttragmittel, und einer Lastaufnahmevorrichtung zum Aufnehmen der Lasttragvorrichtung, wobei mindestens ein Zwischenlagerplatz zur temporären Zwischenlagerung mindestens eines Packstücks an oder auf dem Kommissionierroboter ausgebildet ist.

Die Erfindung betrifft weiterhin Verfahren zum Betreiben eines mobilen Kommissionierroboters zur Entnahme von Packstücken aus einem Warenlager und zum Packen dieser auf eine Lasttragvorrichtung, wobei der Kommissionierroboter mit einem Lasthandhabungsmanipulator, mit einem Lasttragmittel, das am Lasthandhabungsmanipulators angeordnet ist, mit einer Steuerung für den Lasthandhabungsmanipulator und das Lasttragmittel, einer Lastaufnahmevorrichtung zum Aufnehmen der Lasttragvorrichtung ausgebildet ist, und mit einer Steuer- und Auswertevorrichtung.

Autonome Flurförderzeuge, insbesondere Kommissionierfahrzeuge, sind bekannt. Diese Kommissionierfahrzeuge erfassen aus Regalen einzelne Packstücke, sogenannte Kolli, und legen diese auf dem Flurförderzeug oder einem Begleitfahrzeug ab.

Es sind mobile Kommissionierroboter bekannt. Die mobilen Kommissionierroboter erhalten in der Regel die Auftragsdaten eines Kommissionierauftrags wie Auftragsnummer, Koordinaten eines Lagerortes, Stückzahl und Gewicht der Packstücke automatisiert per Kabel oder kabellos von einem Lagerrechner. Die Kommissionierroboter fahren nach einer vorgegebenen Reihenfolge die Regalfächer an und erfassen die entsprechenden Packstück des Kommissionierauftrags mit Hilfe zum Beispiel eines aus Saugnäpfen bestehenden Greifsystems aus dem Regalfach und legen die Packstücke auf eine mitgeführte Lasttragvorrichtung oder sie haben Tabletts, auf denen die Packstücke aus dem Regal entnommen werden. Die Lasttragmittel selbst sind beispielsweise mit einem Bildverarbeitungssystem ausgestattet, das die Lageerkennung der Packstücke übernimmt.

Die DE 10 2015 220 091 A1 offenbart einen gattungsgemäßen mobilen Kommissionierroboter, der auf einer Trageinrichtung eine Auftragspalette (Zielpalette) mitführt und mit einer Aufnahmeeinrichtung eine Sortiments palette (Quellpalette) aufnehmen kann. Zum Kommissionieren fährt der Kommissionierroboter neben eine in einem Regal befindliche Sortimentspalette und entnimmt diese Sortimentspalette mit der Aufnahmeeinrichtung aus ihrer Lagerposition in dem Regal. Dann kann der Kommissionierroboter mit einem an einem Roboterarm angeordneten Greifer ein Packstück aus der aufgenommene Sortimentspalette aufnehmen und dieses Packstück auf die mitgeführte Auftragspalette ablegen. Anschließend wird die Sortimentspalette mittels der Aufnahmeeinrichtung wieder zurück an ihren Lagerplatz im Regal zurückgestellt, bevor der Kommissionierroboter seinen Kommissionierweg fortsetzt und zur nächsten Sortimentspalette fährt, von der etwas kommissioniert werden soll.

Die Effizienz beim Kommissionieren im Allgemeinen liegt darin, möglichst kurze Wege für einen Kommissionierauftrag zurückzulegen, so dass der Kommissionierroboter mit einem optimierten, d.h. kurzen Weg, durch das Warenlager und die Regalgänge fährt und die Packstücke des Kommissionierauftrags aus den Regalfächern aufnimmt und auf die Lasttragvorrichtung stapelt. Bei einem derartigen optimierten Weg des Kommissionierauftrags werden jedoch die Packstücke des Kommissionierauftrags in einer den Stationen, an denen jeweils Packstücke entnommen werden, entsprechenden vorgegeben Reihenfolge auf die Lasttragvorrichtung gestapelt. Diese vorgegebene Reihenfolge der Packstücke stellt jedoch eine große Einschränkung dar, die zu einem schlechten Packmuster der Packstücke des Kommissionierauftrags auf der Lasttragvorrichtung führt. Als schlechtes Packmuster ist ein Packmuster zu verstehen, bei dem die Packstücke zu einer hohen, weniger dicht gepackten und instabilen Lasttragvorrichtung führen. Bei bekannten mobilen Kommissionierrobotern, die mit einem optimierten Weg betrieben werden, ergibt sich somit das Packmuster der Packstücke eines Kommissionierauftrags auf der Lasttragvorrichtung aus dem zurückgelegten Weg und das Packmuster der Packstücke eines Kommissionierauftrags auf der Lasttragvorrichtung muss sich an die aus dem zurückgelegten Weg resultierenden vorgegebenen Reihenfolge der Packstücke anpassen.

Es gibt mittels Computer unterstützte Verfahren, die ein optimiertes Packmuster für eine mit Packstücken zu kommissionierende Lasttragvorrichtung errechnen, sogenannte Packmustergeneratoren. Bekannte Packmustergeneratoren sind dafür ausgelegt, um im stationären Umfeld, bei einem Ware zu Mensch bzw. Ware zu stationärem Kommissionierroboter, ein bestmögliches Packmuster zu errechnen und dann die Packstücke in der entsprechenden Reihenfolge anzufordern. Bei mobilen Kommissionierrobotern sind derartige Packmustergeneratoren bislang nicht eingesetzt, da der mobile Kommissionierroboter für ein optimiertes Packmuster der Packstücke eines Kommissionierauftrags auf der Lasttragvorrichtung lange Wege in dem Warenlager zurücklegen müsste, da Hin- und Herfahrten in dem Warenlager und den Regalgängen auftreten würden.

Optimierte Packmuster sind wichtig, um eine dichter gepackte und stabilere Lasttragvorrichtung, z.B. Palette, zu erzielen. Dies bring t Vorteile in der gesamten Transportkette vom Verpacken, Transportieren und Entpacken, sowie im Raumbedarf.

Der vorliegenden Erfindung liegt die Aufgabe zugrunde, automatisierte Kommissionierungen mit einem mobilen Kommissionierroboter effizienter durchzuführen.

Diese Aufgabe wird erfindungsgemäß dadurch gelöst, dass der Kommissionierroboter derart ausgeführt ist, dass ein aus dem Warenlager für eine späteres Packen auf ein noch zu kommissionierendes anderes Packstück bereits entnommenes Packstück auf dem Zwischenlagerplatz des mobilen Kommissionsroboters mittels des Lasthandhabungsmanipulators abgelegt und temporär zwischengelagert wird und später im Kommissionierweg aufgenommene Packstücke zuerst auf die Lasttragvorrichtung gepackt werden, bevor das auf dem Zwischenlagerplatz abgelegte Packstück mittels des Lasthandhabungsmanipulators auf die Lasttragvorrichtung gepackt wird.

Der Lasthandhabungsmanipulator ist hierbei derart ausgebildet, dass Packstücke auf der Lasttragvorrichtung und auf dem mindestens einen Zwischenlagerplatz mittels des Lasthandhabungsmanipulators ablegbar bzw. aufnehmbar sind.

Ein Packstück ist jedes Stückgut, das zur Kommissionierung bestimmt ist und auf eine Lasttragvorrichtung zusammen mit anderen Packstücken gepackt werden soll.

Mit einem Zwischenlagerplatz oder mehreren Zwischenlagerplätzen an dem mobilen Kommissionierroboter werden eine Reihe von Vorteilen erzielt. Ein mobiler Kommissionierroboter, der mit einem optimierten, d.h. kurzen Weg, durch das Warenlager und die Regalgänge fährt und die Packstücke des Kommissionierauftrags aus den Regalfächern aufnimmt, kann auf dem Zwischenlagerplatz Packstücke ablegen, die bei sofortiger Ablage auf der Lasttragvorrichtung zu einer Verschlechterung des Packmusters der Lasttragvorrichtung führen würden. Erste Packstücke, die im optimierten Kommissionierweg des mobilen Kommissionierroboters vor anderen, auf der Lasttragvorrichtung tiefer anzuordnenden zweiten Packstücken vorgelagert sind und beispielsweise leichter sind oder höheres Gewicht von möglichen darüber gestapelten Packstücken nicht gut vertragen, können vorteilhafterweise vom mobilen Kommissionierroboter bereits aufgenommen werden und temporär auf dem Zwischenlagerplatz zwischengespeichert werden, sodass diese ersten Packstücke für ein optimiertes Packmuster später zur Verfügung stehen, wenn entsprechende schwerere und für tiefere Ebenen vorgesehenen zweite Packstücke auf der Lasttragvorrichtung gepackt sind. Somit wird ein schlechtes Packmuster vermieden, dass beispielsweise zu einer höheren, weniger dicht gepackten oder instabileren Lasttragvorrichtung führt, und ein optimiertes Packmuster ermöglicht, bei dem die Lasttragvorrichtung mit den Packstücken stabiler, dichter und niedriger gepackt ist. Der erfindungsgemäße mobile Kommissionierroboter kann trotzdem einen optimierten und somit kurzen Kommissionierweg zurücklegen. Der zurückzulegende Weg, d.h. der Kommissionierweg, ist hierbei das Optimierungsziel. Mittels des Zwischenlagerplatzes an dem mobilen Kommissionierroboters als Zwischenlager für Packstücke eines Kommissionierauftrags ergibt sich nun eine Verbesserungsmöglichkeit des Packmusters.

Der Zwischenlagerplatz ist bevorzugt als eine ebene Ablagefläche ausgeführt und dient als Zwischenspeicher eines oder mehrerer Packstücke.

Wird ein Packstück aus dem Warenlager für eine späteres Packen auf ein noch zu kommissionierendes anderes Packstück bereits entnommen, da es am Anfang des Kommissionierwegs liegt, wird hierfür jeweils das Packstück auf dem Zwischenlagerplatz des mobilen Kommissionsroboters mittels des Lasthandhabungsmanipulators abgelegt. Somit ist das jeweilige Packstück von dem Zwischenlagerplatz mittels des Lasthandhabungsmanipulators wieder präzise ergreifbar und präzise entsprechend des Packmusters auf der Lasttragvorrichtung ablegbar, sobald gemäß des vorgegeben, optimierten Packmusters die richtigen Packstücke als darunter liegende Ebene auf die Lasttragvorrichtung abgelegt sind.

Ein Gedanke der Erfindung ist, eine effizientere Kommissionierung dadurch zu erzielen, dass bei einem mobilen Kommissionierroboter, der mit einem optimierten, d.h. kurzen Weg, durch das Warenlager und die Regalgänge fährt, eine Lasttragvorrichtung, beispielsweise eine Palette, insbesondere eine Europalette, durch das optimierte Packmuster effizienter und dichter sowie stabiler bereits im Kommissioniervorgang gepackt wird, wobei der Kommissionierweg effizient kurz bzw. optimiert ist. Hierzu wird die Lasttragvorrichtung bereits auf dem mobilen Kommissionierroboter mit Packstücken, sogenannten Kolli, effizient und stabil gepackt. Durch eine effizientere Packweise lässt sich die Lasttragvorrichtung deutlich höher bzw. niedriger bzw. stabiler je nach Strategie packen und somit mehr Kolli als herkömmlich unterbringen.

Gemäß einer vorteilhaften Ausgestaltungsform der Erfindung ist der Kommissionierroboter derart ausgebildet, dass gemäß eines für einen Kommissionierauftrag vorgegebenen, optimierten Packmusters der Packstücke auf der Lasttragvorrichtung die Packstücke des Kommissionierauftrags mittels des Lasthandhabungsmanipulators auf die Lasttragvorrichtung gestapelt werden.

Um die Freiheitsgrade bezüglich der Verbesserung eines Packmusters zu erhöhen, sind der mindestens eine Zwischenlagerplatz, bevorzugt zwei, weiter bevorzugt drei Zwischenlagerplätze zur Zwischenlagerung mindestens eines Packstücks, insbesondere seitlich, neben der Lasttragvorrichtung und/oder neben dem Lasthandhabungsmanipulator und/oder um die Lasttragvorrichtung und/oder um den Lasthandhabungsmanipulator herum angeordnet und ausgebildet. Somit kann der herkömmliche Lasthandhabungsmanipulator, der für den mobilen Kommissionierroboter vorgesehen ist, ohne bauliche Veränderungen eingesetzt werden. Zudem werden hierdurch kurze Greifwege des Lasthandhabungsmanipulators erzielt.

Gemäß einer weiterbilden Ausführungsform umfasst der Zwischenlagerplatz bevorzugt eine Rückwand und/oder Seitenwände zur Ladungssicherung. Somit wird verhindert, dass auf den Zwischenlagerplatz abgelegte Packstücke bei Kurvenfahrt vom Zwischenlagerplatz herunterfallen können.

Gemäß einer alternativen Ausführungsform ist der Zwischenlagerplatz beispielsweise mit einem Rollenboden ausgebildet. Somit können schwerere Kollis sicher zwischengelagert werden.

Der Zwischenlagerplatz kann gemäß einer Ausgestaltungsform der Erfindung in Längsrichtung des Kommissionierroboters zur Lasttragvorrichtung hin orientiert angeordnet sein. Der Zwischenlagerplatz ist somit zwischen der Lasttragvorrichtung und dem Lasthandhabungsmanipulator angeordnet. Dadurch werden die Anforderungen an die Beweglichkeit des Lasthandhabungsmanipulators nicht erhöht.

Um die Kinematik des Lasthandhabungsmanipulators nicht unnötig zu verlängern, ist der Zwischenlagerplatz gemäß einer Ausgestaltungsform der Erfindung auf der gegenüberliegenden Seite zur Lastaufnahmevorrichtung bezüglich des mittig dazwischen angeordneten Lasthandhabungsmanipulators angeordnet.

Gemäß einer alternativen Ausführungsform ist der mindestens eine Zwischenlagerplatz oberhalb der Lastaufnahmevorrichtung, insbesondere an schlanken Stützen und Schienen befestigt. Somit ist der Kommissionierroboter auch in der Fläche optimiert und die Außenabmessungen des Kommissionierroboters werden durch den mindestens einen Zwischenlagerplatz nicht vergrößert.

Um die auf dem Zwischenlagerplatz befindlichen Packstücke durch das Lasttragmittel von unten untergreifen zu können, kann der Zwischenlagerplatz gemäß einer Ausgestaltungsform der Erfindung einen Boden aus Schienen und/oder schlanken Stützen, ähnlich einem Nagelbett aufweisen.

Weiterbevorzugt ist der mindestens eine Zwischenlagerplatz derart ausgebildet, um mindestens ein Packstück, bevorzugt mehrere Packstücke auf dem mindestens einen Zwischenlagerplatz zwischenzulagern. Dabei können es gleiche Packstücke oder verschiedene Packstücke sein. Somit sind die Freiheitsgrade bezüglich eines optimierten Packmusters bei gleichzeitig optimiertem Kommissionierweg deutlich erhöht und verbessert.

Gemäß einer vorteilhaften Weiterbildung der Erfindung ist der mindestens eine Zwischenlagerplatz mit einer Dreh- und/oder Kippeinrichtung versehen. Dadurch wird es ermöglicht, ein auf dem Zwischenlagerplatz abgelegtes Packstück zu drehen und/oder zu kippen. Dadurch kann beispielsweise ein längs auf dem Zwischenlagerplatz abgelegtes Packstück durch Drehen quer und/oder durch Kippen hochkant in das Packmuster auf der Lasttragvorrichtung integriert werden, wodurch das Packmuster weiter optimiert werden kann. Mit einer Dreh- und/oder Kippeinrichtung wird es auch ermöglicht, ein Packstück nur zum Zweck einer Neupositionierung auf dem Zwischenlagerplatz abzulegen, um das Packstück durch Drehen und/oder Kippen umzupositionieren. Dadurch wird es ermöglicht, das Lasttragmittel im Aufbau zu vereinfachen, da ein einfach aufgebautes Lasttragmittel ohne Dreheinrichtung oder Kippeinrichtung verwendet werden kann.

Gemäß einer vorteilhaften Ausführungsform der Erfindung umfasst der Kommissionierroboter einen autonomen Fahrantrieb mit einer autonomen Fahrzeugsteuerung und einer Energiequelle und die Steuerung des Lasthandhabungsmanipulators und die Fahrzeugsteuerung stehen in bidirektionalem Datenaustausch, um das vorgegebene, optimierte Packmuster der Lasttragvorrichtung mit Packstücken nach einem von einer Steuer- und Auswertevorrichtung vorgegebenen Kommissionierweg umzusetzen. Somit sind eine Optimierung von Fahrweg zur Kommissionierung und Packmuster der Lasttragvorrichtung leicht realisierbar. Bisherige manuelle Kommissionertätigkeiten können somit effizient automatisiert mit einer hohen richtigen Kommissionierquote durchgeführt werden.

Der mindestens eine Zwischenspeicher kann direkt an dem mobilen Kommissionierroboter angeordnet sein. Der mobile Kommissionierroboter kann hierbei mit einer Lastaufnahmevorrichtung für die Lasttragvorrichtung versehen sein. Sofern der mobile Kommissionierroboter nur die Pick-Tätigkeit der Packstücke übernimmt, kann die Lastaufnahmevorrichtung für die Lasttragvorrichtung und/oder der mindestens eine Zwischenlagerplatz an einem Transportfahrzeug ausgebildet sein, das mit dem mobilen Kommissionierroboter gekoppelt wird.

Gemäß einer alternativen Ausführungsform ist die Lastaufnahmevorrichtung, insbesondere mit dem mindestens einen Zwischenlagerplatz, an den Kommissionierroboter als separater Wagen ausgebildet, der mit dem Kommissionierroboter koppelbar ist. Der mobile Kommissionierroboter umfasst somit einen mit diesem gekoppelten Wagen, der die Lastaufnahmevorrichtung zur Mitführung der Lasttragvorrichtung bildet und mit dem mindestens einen Zwischenlagerplatz versehen ist. Der separate Wagen kann auch als autonomes Transportfahrzeug ausgebildet sein, das mit dem autonomen mobilen Kommissionierroboter gekoppelt ist. Somit kann der mobile Kommissionierroboter für eine Vielzahl von verschiedenen Wagen schnell wechselbar eingesetzt werden. Der Wagen kann hierbei zur Kopplung an den Kommissionierroboter angehängt oder von diesem aufgenommen werden. Alternativ ist eine virtuelle Kopplung denkbar, wenn der Wagen einen eigenen Fahrantrieb aufweist.

Gemäß einer Weiterbildung der Erfindung ist eine Steuer- und Auswertevorrichtung zum Generieren eines optimierten Kommissionierwegs für den mobilen Kommissionierroboter und zum Generieren eines optimierten Packmusters aus einer Vielzahl von Packstücken zu einer stabilen Lasttragvorrichtung auf einer Lastaufnahmevorrichtung für einen Kommissionierauftrag unter Zuhilfenahme des mindestens einen Zwischenlagerplatzes zur temporären Zwischenlagerung mindestens eines Packstückes vorgesehen. Die Steuer- und Auswertevorrichtung hat alle wesentlichen Daten von den einzelnen Packstücken des Kommissionierauftrags, wie Größe, Gewicht sowie Lagerort der Packstücke zur Verfügung. Die Steuer- und Auswertevorrichtung erstellt für den Kommissionierauftrag den optimierten Kommissionierweg und das optimierte Packmuster der Lasttragvorrichtung.

Damit ist das Packmuster optimiert und der Weg gegebenenfalls verkürzt und effektiver.

Die Aufgabe wird auch durch ein Verfahren zum Betreiben eines mobilen Kommissionierroboters dadurch gelöst, dass von der Steuer- und Auswertevorrichtung für einen Kommissionierauftrag ein optimierter Kommissionierweg erzeugt wird und ein optimiertes Packmuster von Packstücken auf der Lasttragvorrichtung erzeugt wird und die Packstücke des Kommissionierauftrags auf der Lasttragvorrichtung mittels des Lasthandhabungsmanipulators gemäß des Packmusters gestapelt werden.

Zum Packen des Packmusters wird mindestens ein Zwischenlagerplatz zur temporären Zwischenlagerung von mindestens einem Packstück berücksichtigt und verwendet. Somit sind Freiheitsgrade zum Erzeugen einer stabileren, komprimierteren, dichter gepackten und niedrigeren Lasttragvorrichtung, zum Beispiel einer Palette, aufgrund eines optimierten Packmusters bei gleichzeitig optimiertem Kommissionierweg einfach realisierbar. Die Kommissionierung erfolgt somit effizienter, da der Lasthandhabungsmanipulator geringere Höhen anfahren muss. Die mit den Packstücken des Kommissioniervorgangs beladenen Lasttragvorrichtungen werden nicht mehr so instabil hoch. Der mobile Kommissionierroboter kann den Kommissionierweg schneller durchfahren. Externe Sicherungsmaßnahmen zur Stabilisierung der Lasttragvorrichtung mit den darauf befindlichen Packstücken während des Kommissioniervorgangs können unter Umständen entfallen.

Nachgelagerte Prozesse ziehen daraus auch weitere Vorteile, wie zum Beispiel eine niedrigere Palette führt zu einem schnelleren Sichern der Palette mittels Folien (das heißt einem Foliervorgang), die Handhabbarkeit beim Verladen auf Lastkraftwagen (LKWs) erfolgt schneller und besser sowie das Entladen am Ziel der Zielpalette erfolgt einfacher sowie das Entfernen der Folie am Zielort.

Um das Verfahren noch effizienter und flexibler mit noch höheren Freiheitsgraden durchzuführen, wird ein Packstück auf den Zwischenlagerplatz zwischengelagert, um ein anderes Packstück von einer anderen Station, das später auf dem Kommissionierweg aufgenommen wird, auf die Lasttragvorrichtung zu packen und danach das früher erfasste auf dem Zwischenlagerplatz zwischengelagerte Packstück auf die Lasttragvorrichtung gepackt wird. Durch die Anordnung eines oder mehrerer Zwischenlagerplätzen an dem mobilen Kommissionierroboter hat die Steuer- und Auswertevorrichtung zusätzliche Freiheitsgrade bei der Umsetzung des optimierten Packmusters. Es können eine oder mehrere Packstücke temporär auf dem Zwischenlagerplatz abgelegt und von dem mobilen Kommissionierroboter mitgeführt werden und zu einem späteren Zeitpunkt des Kommissioniervorgangs und damit an einem anderen Ort im Packmuster in das Packmuster integriert werden.

Gemäß einer Weiterbildung des Verfahrens werden ein Packstück oder mehrere Packstücke über eine Station oder mehrere Stationen zum Erfassen von einzelnen Packstücken abhängig vom generierten Packmuster auf dem Zwischenlagerplatz zwischengelagert. Somit können der Kommissionierweg und das Packmuster weiter optimiert werden, indem Packstücke, die in höheren Ebenen auf der Palette angeordnet werden müssen, auf den Zwischenlagerplätzen länger zwischengelagert werden. Eine Station bildet dabei einen Ort, an dem der mobile Kommissionierroboter ein Packstück des Kommissionierauftrags aufnimmt.

Eine weitere Optimierung des Verfahrens ergibt sich dadurch, dass die Kombination aus Packmuster und Kommissionierweg derart optimiert wird, dass gegebenenfalls Stationen zum Erfassen von einzelnen Packstück des Kommissionierauftrags übersprungen werden und später zur übersprungenen Station zurückgekehrt wird.

Um noch effizienter die Kommissionierung durchzuführen, werden während der Fahrt des mobilen Kommissionierroboters auf dem Kommissionierweg die Packstücke zwischen mindestens einem Zwischenlagerplatz und Lasttragvorrichtung gepackt und umgepackt.

Weitere Vorteile und Einzelheiten der Erfindung werden anhand der in den schematischen Figuren dargestellten Ausführungsbeispiele näher erläutert. Hierbei zeigen
- Figur 1: eine schematische Seitenansicht eines erfindungsgemäßen mobilen Kommissionierroboter,
- Figur 2: eine schematische Draufsicht eines erfindungsgemäßen mobilen Kommissionierroboters,
- Figur 3: eine schematische Draufsicht eines erfindungsgemäßen mobilen Kommissionierroboters gemäß einer alternativen Ausführungsform und
- Figur 4: eine schematische Seitenansicht eines erfindungsgemäßen mobilen Kommissionierroboter gemäß einer weiteren Ausführungsform.

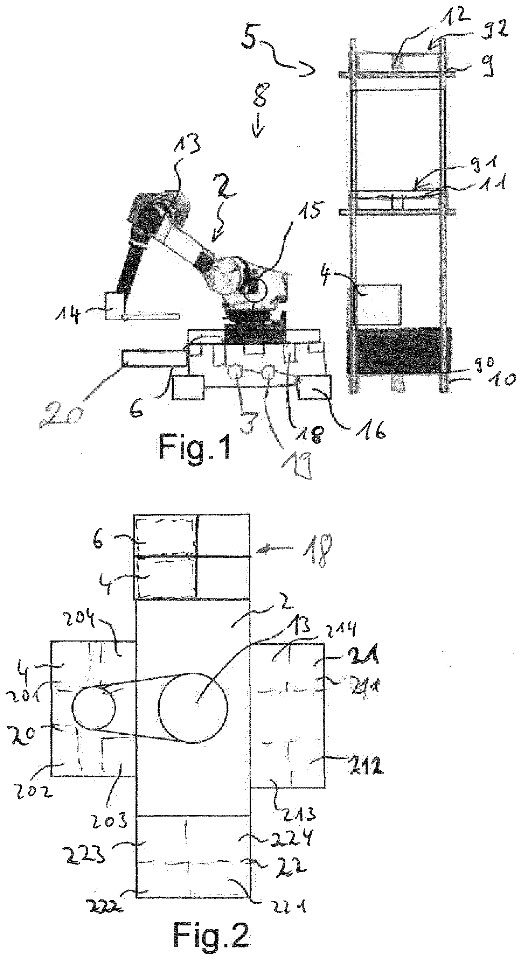

Die Fig. 1 zeigt eine schematische Seitenansicht eines erfindungsgemäßen mobilen Kommissionierroboters 2.

Es ist eine Steuer- und Auswertevorrichtung 3 für den mobilen Kommissionierroboter 2 vorgesehen. Die Steuer- und Auswertevorrichtung 3 umfasst einen Rechner und hat alle wesentlichen Daten einer abzuarbeitenden Kommissionierauftrags zur Kommissionierung von einzelnen Packstücken 4 (Kolli) aus dem gesamten Lager 5. Die Packstücke 4 sollen abhängig von Bestellungen von Kunden individuell auf jeweils einer Lasttragvorrichtung 6, beispielsweise einer Palette, zum Versand kommissioniert werden. Die in der Steuer- und Auswertevorrichtung 3 vorhandenen Daten sind die Koordinaten des Lagerorts, die Stückzahl und das Gewicht sowie der Größe der jeweiligen Packstücke 4 des Kommissionierauftrags. Die in der Steuer- und Auswertevorrichtung 3 vorhandenen Daten können weiterhin noch Form, Stabilität, Obenaufgewicht für ein aktuelles oder ein anderes Packstück, eine Familiengruppierung von Packstücken auf der Lasttragvorrichtung, oder andere Optimierungsgrößen, beispielsweise eine Vorgabe, dass keine chemischen Produkte oberhalb von Lebensmitteln gepackt werden dürfen, umfassen.

Aus diesen Daten wird für einen Kommissionierauftrag ein optimierter Kommissionierweg und ein optimiertes Packmuster der zu kommissionierenden Packstücke 4 auf der Lasttragvorrichtung 6 von der Steuer-und Auswertevorrichtung 3 erzeugt oder an die Steuer- und Auswertevorrichtung 3 übertragen. Die Steuer- und Auswertevorrichtung 3 oder eine übergeordnete Steuerung des Lagers, in dem der Kommissionierroboters 2 betrieben wird und die mit der Steuer- und Auswertevorrichtung 3 in Verbindung steht, umfasst hierzu einen Packmustergenerator, der ein optimiertes Packmuster für die mit den Packstücken 4 des Kommissionierauftrags zu kommissionierende Lasttragvorrichtung 6 berechnet. Die Lasttragvorrichtung 6 ist ein Behälter oder eine Palette, in der oder auf die sämtliche bestellte Packstücke 4 für einen Kommissionierauftrag zusammengepackt werden.

Vor Beginn des Kommissioniervorgangs wird von der Steuer- und Auswertevorrichtung 3 des Kommissionierroboters 2 für jeden Kommissionierauftrag der optimierte Kommissionierweg mit dem dazugehörigen optimierten Packmuster erzeugt. Somit fährt der Kommissionierroboter 2 einen möglichst kurzen Weg durch das Lager 5, um alle bestellten einzelnen und verschiedenen Packstücke 4 einzusammeln und bevorzugt gleich nacheinander auf die Lasttragvorrichtung 6 versandfertig zu packen.

Die Fig. 1 zeigt den mobilen Kommissionierroboter 2 in einem Lagergang 8 vor einem Lagerregal 9 an einer Station zur Entnahme eines oder mehrere bestimmter Packstücke 4 aus dem Lagerregal 9. Der Kommissionierroboter 2 ist mit einem Lasthandhabungsmanipulator 13 und einem Lasttragmittel 14 ausgebildet, das an dem Lasthandhabungsmanipulator 13 angeordnet ist. Eine mit der Steuer- und Auswertevorrichtung 3 in Verbindung stehende Steuerung 15 steuert den Lasthandhabungsmanipulator 13 und das Lasttragmittel 14. Der mobile Kommissionierroboter 2 ist als autonomes Flurförderzeug mit einem autonomen Fahrantrieb 16 und einer autonomen Fahrzeugsteuerung 19 ausgebildet. Der autonome Fahrantrieb 16 wird bevorzugt von einer elektrischen Energiequelle gespeist. Die Steuerung 15 und die autonome Fahrzeugsteuerung 19 stehen in bidirektionalen Datenaustausch. Die Steuer- und Auswertevorrichtung 3 ist der Steuerung 15 und der Fahrzeugsteuerung 19 übergeordnet. Die Steuer- und Auswertevorrichtung 3 gibt den abzufahrenden Kommissionierweg in Verbindung mit dem zu packenden optimierten Packmuster für die Lasttragvorrichtung 6 vor. Die Steuer- und Auswertevorrichtung 3 steuert entsprechend die Steuerung 15 und die Fahrzeugsteuerung 19 an, um optimiert die Lasttragvorrichtung 6 mit einem optimierten Kommissionierweg zu packen.

Verschiedene oder gleiche Packstücke 4 sind auf drei verschiedenen Ebenen 90, 91, 92 auf Europaletten als Quellen, also weiterer Lasttragvorrichtungen 10, 11, 12 übereinander angeordnet.

Der Lasthandhabungsmanipulator 13 ist mit dem Lasttragmittel 14 derart ausgebildet, sodass das zu erfassende Packstück 4 sowohl beim Erfassen als auch beim Umpacken und Ablegen im Wesentlichen immer in der horizontalen Lage, wie in der Fig. 1 gezeigt ist, bleibt. Der Kommissionierroboter 2 weist eine Lastaufnahmevorrichtung 18 auf, um die Lasttragvorrichtung 6 aufzunehmen.

Um die Kommissionierung automatisiert effizienter mit einem mobilen Kommissionierroboter 2 durchzuführen, umfasst der Kommissionierroboter 2 mindestens einen Zwischenlagerplatz 20 zur temporären Zwischenlagerung des mindestens einen Packstücks 4. Somit kann bei der automatisierten Kommissionierung zwischen verschiedenen Packstücken 4 unterschieden werden, die ein unterschiedliches Gewicht und/oder eine unterschiedliche Größe aufweisen. Idealerweise werden Packstücke 4, die größer ausgebildet sind und/oder ein höheres Gewicht haben tiefer, in unteren Ebenen auf der Lasttragvorrichtung 6 gepackt und leichtere Packstücke 4 auf oberen Ebenen auf der Lasttragvorrichtung 6 gepackt. Somit lässt sich eine Lasttragvorrichtung 6 effizienter automatisiert mit Packstücken 4 packen.

Da Stationen des Kommissionierwegs von dem mobilen Kommissionierroboter 2 nicht zwingend nach dem optimierten Packmuster angefahren werden und angeordnet sind, lässt sich mit mindestens einem zusätzlichen Zwischenlagerplatz 20 zur temporären Zwischenlagerung des mindestens einen Packstücks 4 ein weiterer Freiheitsgrad erzielen. Außerdem variieren die Stationen des Kommissionierwegs abhängig von dem Kundenauftrag, sodass jede Kommissionierung individuell und einmalig erfolgt.

Um die Packstücke 4 mit einem speziellen, optimierten Packmuster auf der Lasttragvorrichtung 6 packen zu können, ist der Lasthandhabungsmanipulator 13 mit dem Lasttragmittel 14 derart ausgebildet, sodass jedes Packstück 4 auf der Lasttragvorrichtung 6 oder auf dem Zwischenlagerplatz 20 stapelbar ist. Somit lässt sich auch jedes Packstück 4, das auf dem Zwischenlagerplatz 20 zwischengelagert ist entsprechend einem individuellen und optimierten Packmuster auf eine spezielle Position und auf eine spezielle Ebene auf der Lasttragvorrichtung 6 packen. Auch lassen sich auf einem Zwischenlagerplatz 20, wie in den Fig. 2-4 gezeigt, mehrere Packstücke 4 zwischenlagern und von diesen definierten Unterzwischenlagerplätzen 201-204, 211-214, 221-224 in das vorher definierte Packmuster effizient auf der Lasttragvorrichtung 6 ver- und umpacken.

In der Fig. 1 ist auf der linken Seite des mobilen Kommissionierroboters 2 ein Zwischenlagerplatz 20 ausgebildet. Weitere besondere alternative Ausführungsformen sind zu den Figuren 2 bis 4 beschrieben.

Die Fig. 2 zeigt eine schematische Draufsicht eines Kommissionierroboters 2 mit mehreren Zwischenlagerplätzen 20, 21, 22 zur Zwischenlagerung von Packstücken 4, insbesondere seitlich an jeder Seite um den Lasthandhabungsmanipulator 13 herum angeordnet. Auf der vierten Seite des rechtwinklig in der Draufsicht ausgebildeten Kommissionierroboters 2 ist in der Verlängerung in Fahrtrichtung längs die Lastaufnahmevorrichtung 18 für die Lasttragvorrichtung 6 angeordnet. Die Lasttragvorrichtung 6 ist eine Palette auf der jeweils mehrere, insbesondere verschiedene Packstücke pro Ebene angeordnet werden können.

Der Lasthandhabungsmanipulator 13 und das Lasttragmittel 14 sind im Wesentlichen aus dem Stand der Technik bekannt und weisen eine Erkennungseinrichtung auf, um definiert nur ein Packstück 4 zu erfassen. Auf den Zwischenlagerplätzen 20, 21, 22 sind beispielsweise jeweils mehrere, beispielsweise vier, Unterzwischenlagerplätze 201-204, 211-214, 221-224 ausgebildet, auf denen jeweils ein Packstück 4 lagerbar ist.

Der Zwischenlagerplatz 22 ist auf der der Lastaufnahmevorrichtung 18 gegenüberliegenden Seite bezüglich des mittig dazwischen angeordneten Lasthandhabungsmanipulators 13 angeordnet. Die Packstücke 4 werden auf Platten, Schienen, Nägeln oder Stützen auf den Zwischenlagerplätzen 20, 21, 22 zwischengelagert und sind wiederholgenau ablegbar und wieder ergreifbar, um diese auf einer definierten Position auf der Lasttragvorrichtung 6, beispielsweise einer Palette, zu packen. Die Lasttragvorrichtung 6 wird bevorzugt derartig gepackt, so dass jeweils die einzelnen Packstücke 4 einer unteren Ebene von darauf liegenden einzelnen Packstücken 4 einer darauf liegenden oberen Ebene, wie beim Bau einer Mauer im Verbund gestapelt werden. Somit kann eine Lasttragvorrichtung 6 stabil eine größere Höhe für den Transport und während der Kommissionierung erreichen.

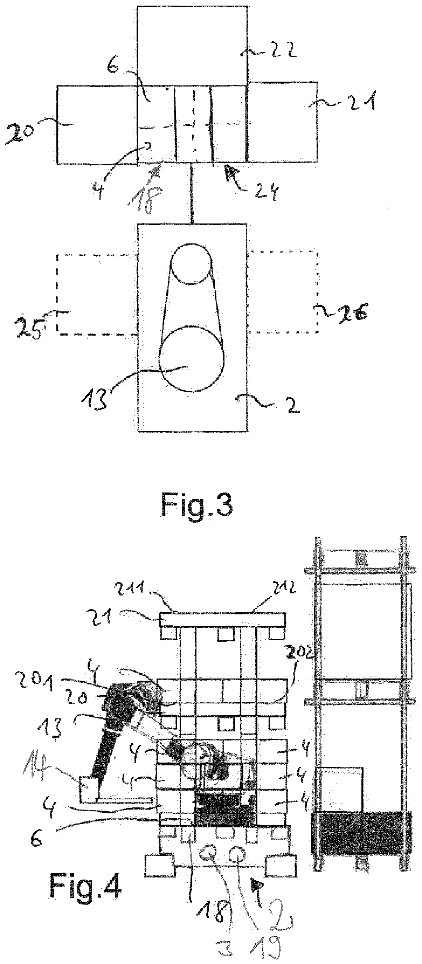

Die Fig.3 zeigt in einer Draufsicht gemäß einer alternativen Ausführungsform, bei der der mobile Kommissionierroboter 2 ein separates, autonomes, mobiles Flurförderzeug nur für die Pick-Tätigkeit der Packstücke 4 aus dem Lager 5 ausbildet. Die Lastaufnahmevorrichtung 18 mit mindestens einem Zwischenlagerplatz 20, 21, 22 sind als separater Wagen 24 ausgebildet, der mit dem Kommissionierroboter 2 gekoppelt ist, beispielsweise an den Kommissionierroboter 2 angehängt oder von dem Kommissionierroboter 2 aufgenommen oder falls der Wagen 24 einen eigenen Fahrantrieb hat, mit dem Kommissionierroboter 2 virtuell gekoppelt sein. Dies hat den Vorteil der relativ kostenintensive Kommissionierroboter 2 intensiver für die Kommissioniervorgänge einsetzbar ist, während die weniger kostenintensive Lastaufnahmevorrichtung 18 mit dem separaten Wagen 24 und der Lasttragvorrichtung 6 und den darauf angeordneten einzelnen Packstücken 4 für verschiedene, weitere Transportvorgänge einsetzbar ist, wie beispielsweise einem Folieren zur LKW-Verladung und Wartezeiten auf die LKW-Verladung, bei denen der mobile Kommissionierroboter 2 nicht mehr benötigt wird.

Die Fig. 3 zeigt mit gestrichelten Linien optionale Zwischenlagerplätze 25, 26, die am Kommissionierroboter 2 ausgebildet sind oder befestigbar sind.

Es versteht sich, dass bei einem Ausführungsbeispiel ähnlich der Figur 3 der mobile Kommissionierroboter 2 mit mindestens einem Zwischenlagerplatz 25, 26 versehen werden kann und der gekoppelte Wagen 24 nur die Lastaufnahmevorrichtung 18 für die Lasttragvorrichtung 6 aufweist.

Die Fig. 4 zeigt eine weiter besondere Ausführungsform, bei der der mindestens eine Zwischenlagerplatz 20, 21 oberhalb der Lastaufnahmevorrichtung 18 für die Lasttragvorrichtung 6 angeordnet ist, somit werden die Kinematik und die Außenabmessungen des mobilen Kommissionierroboters 2 aufgrund des zusätzlichen mindestens einen Zwischenlagerplätze 20, 21 nicht verändert oder vergrößert. Die Zwischenlagerplätze 20, 21 sind auf schlanken Stützen und Schienen angeordnet. Ferner sind die Wege des Lasthandhabungsmanipulators 13 verkürzt im Gegensatz zu den Ausführungsbeispielen der Fig. 2 und der Fig. 3, da die Seite bezüglich des mobilen Kommissionierroboters nicht mehr gewechselt werden muss, sondern lediglich die Höhe der Packstücke 4 verändert wird.

Somit ist es leicht realisierbar, ein Packstück 4, das auf den Zwischenlagerplatz 20, 21 zwischengelagert wird, um ein anderes schwereres Packstück 4, von einer folgenden, anderen Station, auf die Lasttragvorrichtung 6 tiefer, also darunter zu packen und danach wiederum das zuerst aufgenommene, auf dem Zwischenlagerplatz 20, 21 befindliche Packstück 4 darauf auf die Lasttragvorrichtung 6 zupacken.

Das optimierte Packmuster und der optimierte Kommissionierweg, die von der Steuer-und Auswertevorrichtung 3 generiert werden, berücksichtigen somit die in den Fig. 1-4 gezeigte Anzahl der Zwischenlagerplätze 20-22 und deren spezifische Unterzwischenlagerplätze 201-204, 211-214, 221-224 für einzelne Packstücke 4, um somit das Packmuster und den Kommissionierweg zu optimieren. Durch die Verwendung der Zwischenlagerplätze 20-22 wird die Kommissionierung somit effizienter.

Mit dem zumindest einen Zwischenspeicher 20-22 an dem mobilen Kommissionierroboter 2 wird erzielt, dass Packstücke 4 temporär abgelegt werden können, die bei sofortiger Positionierung auf der Lasttragvorrichtung 6 zu einer Verschlechterung des Packmusters führen würden. Der Steuer-und Auswertevorrichtung 3, die einen Packmustergenerator bildet oder mit einem Packmustergenerator in Verbindung steht, ist der gesamte abzuarbeitende Kommissionierauftrag bekannt. Damit ist der Steuer-und Auswertevorrichtung 3 auch bekannt, welche Packstücke 4 noch auf die Lasttragvorrichtung 6 gestapelt werden müssen. Wird nun der mobile Kommissionierroboter 2 mit einem optimierten kurzen Kommissionierweg durch das Lager 5 bewegt, kann es zu Zuständen kommen, in denen Größen wie Form, Stabilität, Obenaufgewicht für ein aktuelles oder ein anderes Packstück, die Familiengruppierung auf der Lasttragvorrichtung, oder andere Optimierungsgrößen, beispielsweise eine Packvorgabe, dass keine chemischen Produkte oberhalb von Lebensmitteln gepackt werden dürfen, massiv negativ beeinflusst werden, wenn ein aktuell aufgenommenes Packstück sofort auf die Lasttragvorrichtung gestapelt wird. Mit dem erfindungsgemäßen Zwischenlagerplatz 20-22 wird eine deutlich verbesserte Verbesserung des Packmusters hinsichtlich Stabilität, dichter Packweise und niedriger Höhe der mit den Packstücken 4 gepackten Lasttragvorrichtung 6 erzielt, da ein aktuell aufgenommenes Packstück 4 auf dem Zwischenlagerplatz 20-22 temporär zwischengelagert werden kann und von dem mobilen Kommissionierroboter 2 mitgeführt werden, und später im Kommissionierweg aufgenommene Packstücke 4 zuerst auf die Lasttragvorrichtung 6 gepackt werden, bevor das auf dem Zwischenlagerplatz 20-22 abgelegte Packstück 4 auf die Lasttragvorrichtung 6 gepackt wird. Mit den Zwischenlagerplätzen 20-22 wird es somit ermöglicht, ein Packstück 4 auf dem Kommissionierroboter 2 abzulegen und zwischenzuspeichern und zu einem späteren Zeitpunkt des Kommissioniervorgangs in das optimierte Packmuster der Lasttragvorrichtung 6 zu integrieren.

Somit ist nun ein Packstück-Zwischenspeicher 20-22 mit mindestens einem Zwischenlagerplatz an dem mobilen Kommissionierroboter 2 geschaffen worden und ein Verfahrens zur Optimierung eines Packmusters einer automatisch mit Packstücken 4 kommissionierten Lasttragvorrichtung 6 bei vorgegebener Kommissionsreihenfolge (optimierter Kommissionierweg) durch einen mobilen Kommissionierroboter 2 geschaffen worden.

## Patentansprüche

1. Mobiler Kommissionierroboter (2) zur Entnahme von Packstücken (4) aus einem Warenlager (5) und zum Packen dieser auf eine Lasttragvorrichtung (6) mit einem Lasthandhabungsmanipulator (13), einem Lasttragmittel (14) zum Erfassen des Packstücks (4), wobei das Lasttragmittel (14) an dem Lasthandhabungsmanipulator (13) angeordnet ist, mit einer Steuerung (15) für den Lasthandhabungsmanipulator (13) und das Lasttragmittel (14), und einer Lastaufnahmevorrichtung (18) zum Aufnehmen der Lasttragvorrichtung (6), wobei mindestens ein Zwischenlagerplatz (20) zur temporären Zwischenlagerung mindestens eines Packstücks (4) an oder auf dem Kommissionierroboter (2) ausgebildet ist, **dadurch gekennzeichnet, dass** der Kommissionierroboter (2) derart ausgeführt ist, dass ein aus dem Warenlager (5) für eine späteres Packen auf ein noch zu kommissionierendes anderes Packstück bereits entnommenes Packstück (4) auf dem Zwischenlagerplatz (20) des mobilen Kommissionsroboters (2) mittels des Lasthandhabungsmanipulators (13) abgelegt und temporär zwischengelagert wird und später im Kommissionierweg aufgenommene Packstücke zuerst auf die Lasttragvorrichtung (6) gepackt werden, bevor das auf dem Zwischenlagerplatz (20) abgelegte Packstück (4) mittels des Lasthandhabungsmanipulators (13) auf die Lasttragvorrichtung (6) gepackt wird.

2. Kommissionierroboter (2) nach Anspruch 1, **dadurch gekennzeichnet, dass** der Kommissionierroboter (3) derart ausgebildet ist, dass gemäß eines für einen Kommissionierauftrag vorgegebenen, optimierten Packmusters der Packstücke (4) auf der Lasttragvorrichtung (6) die Packstücke (4) des Kommissionierauftrags mittels des Lasthandhabungsmanipulators (13) auf die Lasttragvorrichtung (6) gestapelt werden.

3. Kommissionierroboter (2) nach Anspruch 1 oder 2, **dadurch gekennzeichnet, dass** der mindestens eine Zwischenlagerplatz (20), bevorzugt zwei, weiter bevorzugt drei Zwischenlagerplätze (21, 22) zur Zwischenlagerung mindestens eines Packstücks (4), insbesondere seitlich, neben der Lasttragvorrichtung (6) und/oder neben dem Lasthandhabungsmanipulator (13) und/oder um die Lasttragvorrichtung (6) und/oder um den Lasthandhabungsmanipulator (13) herum angeordnet und ausgebildet sind.

4. Kommissionierroboter (2) nach einem der Ansprüche 1 bis 3, **dadurch gekennzeichnet, dass** der Zwischenlagerplatz (20) auf der gegenüberliegenden Seite zur Lastaufnahmevorrichtung (18) bezüglich des mittig dazwischen angeordneten Lasthandhabungsmanipulators (13) angeordnet ist.

5. Kommissionierroboter (2) nach einem der Ansprüche 1 bis 4, **dadurch gekennzeichnet, dass** der mindestens eine Zwischenlagerplatz (20) oberhalb der Lastaufnahmevorrichtung (18) angeordnet ist, insbesondere an schlanken Stützen und Schienen befestigt ist.

6. Kommissionierroboter (2) nach einem der Ansprüche 1 bis 5, **dadurch gekennzeichnet, dass** der mindestens eine Zwischenlagerplatz (20) derart ausgebildet ist, um mindestens ein Packstück (4), bevorzugt mehrere Packstücke (4) auf dem mindestens einen Zwischenlagerplatz (20) zwischenzulagern.

7. Kommissionierroboter (2) nach einem der Ansprüche 1 bis 6, **dadurch gekennzeichnet, dass** der mindestens eine Zwischenlagerplatz (20; 21; 22) mit einer Dreh- und/oder Kippeinrichtung versehen ist.

8. Kommissionierroboter (2) nach einem der Ansprüche 1 bis 7, **dadurch gekennzeichnet, dass** der Kommissionierroboter (2) einen autonomen Fahrantrieb (16) mit einer autonomen Fahrzeugsteuerung (18) und einer Energiequelle umfasst und die Steuerung (15) des Lasthandhabungsmanipulators (13) und die Fahrzeugsteuerung (18) in bidirektionalem Datenaustausch stehen, um das vorgegebene, optimierte Packmuster der Lasttragvorrichtung (6) mit Packstücken (4) nach einem von einer Steuer-und Auswertevorrichtung (3) vorgegebenen Kommissionierweg umzusetzen.

9. Kommissionierroboter (2) nach einem der Ansprüche 1 bis 8, **dadurch gekennzeichnet, dass** die Lastaufnahmevorrichtung (18), insbesondere mit dem mindestens einen Zwischenlagerplatz (20), an den Kommissionierroboter (2) als separater Wagen (24) ausgebildet ist, der mit dem Kommissionierroboter (2) koppelbar ist.

10. Kommissionierroboter (2) nach einem der Ansprüche 1 bis 9, **dadurch gekennzeichnet, dass** eine Steuer- und Auswertevorrichtung (3) zum Generieren eines optimierten Kommissionierwegs für den mobilen Kommissionierroboter (2) und zum Generieren eines optimierten Packmusters aus einer Vielzahl von Packstücken (4) zu einer stabilen Lasttragvorrichtung (6) auf einer Lastaufnahmevorrichtung (18) für einen Kommissionierauftrag unter Zuhilfenahme des mindestens einen Zwischenlagerplatzes (20) zur temporären Zwischenlagerung mindestens eines Packstückes (4) vorgesehen ist.

11. Verfahren zum Betreiben eines mobilen Kommissionierroboters (2) nach einem der Ansprüche 1 bis 10, zur Entnahme von Packstücken (4) aus einem Warenlager (5) und zum Packen dieser auf eine Lasttragvorrichtung (6), wobei der Kommissionierroboter (2) mit einem Lasthandhabungsmanipulator (13), mit einem Lasttragmittel (14), das am Lasthandhabungsmanipulators (13) angeordnet ist, mit einer Steuerung (15) für den Lasthandhabungsmanipulator (13) und das Lasttragmittel (14), einer Lastaufnahmevorrichtung (18) zum Aufnehmen der Lasttragvorrichtung (6) ausgebildet ist, und mit einer Steuer- und Auswertevorrichtung (3), **dadurch gekennzeichnet, dass** von der Steuer- und Auswertevorrichtung (3) für einen Kommissionierauftrag ein optimierter Kommissionierweg erzeugt wird und ein optimiertes Packmuster von Packstücken (4) auf der Lasttragvorrichtung (6) erzeugt wird und die Packstücke (4) des Kommissionierauftrags auf der Lasttragvorrichtung (6) mittels des Lasthandhabungsmanipulators (13) gemäß des Packmusters gestapelt werden.

12. Verfahren nach dem vorherigen Anspruch 11, **dadurch gekennzeichnet, dass** zum Packen des Packmusters der mindestens eine Zwischenlagerplatz (20) zur Zwischenlagerung von mindestens einem Packstück (4) berücksichtigt und verwendet wird.

13. Verfahren nach dem vorherigen Anspruch 12, **dadurch gekennzeichnet, dass** ein Packstück (4) auf den Zwischenlagerplatz (20) zwischengelagert wird, um ein anderes Packstück (4) von einer anderen Station, das später auf dem Kommissionierweg aufgenommen wird, auf die Lasttragvorrichtung (6) zu packen und danach das früher erfasste auf dem Zwischenlagerplatz (20) zwischengelagerte Packstück (4) auf die Lasttragvorrichtung (6) gepackt wird.

14. Verfahren nach einem der Ansprüche 12 oder 13, **dadurch gekennzeichnet, dass** ein Packstück (4) oder mehrere Packstücke (4) über eine Station oder mehrere Stationen zum Erfassen von einzelnen Packstücken (4) abhängig vom generierten Packmuster auf dem Zwischenlagerplatz (20) zwischengelagert werden.

15. Verfahren nach einem der vorherigen Ansprüche 12 bis 14, **dadurch gekennzeichnet, dass** während der Fahrt des mobilen Kommissionierroboters (2) auf dem Kommissionierweg die Packstücke (4) zwischen mindestens einem Zwischenlagerplatz (20) und der Lasttragvorrichtung (6) gepackt und umgepackt werden.

## Claims

1. Mobile order-picking robot (2) for removing packages (4) from a warehouse (5) and for packing the same onto a load-carrying device (6) having a load-handling manipulator (13), a load-carrying means (14) for grasping the package (4), wherein the load-carrying means (14) is arranged on the load-handling manipulator (13), having a controller (15) for the load-handling manipulator (13) and the load-carrying means (14), and a load-receiving device (18) for receiving the load-carrying device (6), wherein at least one intermediate storage space (20) is designed for the temporary intermediate storage of at least one package (4) at or on the order-picking robot (2), **characterized in that** the order-picking robot (2) is designed in such a way that a package (4) already removed from the warehouse (5) for subsequent packing onto another package yet to be picked is stored on the intermediate storage space (20) of the mobile order-picking robot (2) by means of the load-handling manipulator (13) and is temporarily intermediately stored, and packages received later on the order-picking route are packed first onto the load-carrying device (6) before the package (4) placed on the intermediate storage space (20) is packed onto the load-carrying device (6) by means of the load-handling manipulator (13).

2. Order-picking robot (2) according to Claim 1, **characterized in that** the order-picking robot (3) is formed in such a way that the packages (4) for the order-picking order are stacked onto the load-carrying device (6) by means of the load-handling manipulator (13) in accordance with an optimized packing pattern of the packages (4) on the load-carrying device (6) that is predefined for an order-picking order.

3. Order-picking robot (2) according to Claim 1 or 2, **characterized in that** the at least one intermediate storage space (20), preferably two, more preferably three intermediate storage spaces (21, 22) for the intermediate storage of at least one package (4), are arranged and formed in particular laterally beside the load-carrying device (6) and/or beside the load-handling manipulator (13) and/or around the load-carrying device (6) and/or around the load-handling manipulator (13).

4. Order-picking robot (2) according to one of Claims 1 to 3, **characterized in that** the intermediate storage space (20) is arranged on the opposite side of the load-receiving device (18) relative to the load-handling manipulator (13) arranged centrally between them.

5. Order-picking robot (2) according to one of Claims 1 to 4, **characterized in that** the at least one intermediate storage space (20) is arranged above the load-receiving device (18), in particular fixed to slim columns and rails.

6. Order-picking robot (2) according to one of Claims 1 to 5, **characterized in that** the at least one intermediate storage space (20) is formed in such a way as to store at least one package (4), preferably a plurality of packages (4), temporarily on the at least one intermediate storage space (20).

7. Order-picking robot (2) according to one of Claims 1 to 6, **characterized in that** the at least one intermediate storage space (20; 21; 22) is provided with a rotating and/or tilting device.

8. Order-picking robot (2) according to one of Claims 1 to 7, **characterized in that** the order-picking robot (2) comprises an autonomous traction drive (16) with an autonomous vehicle controller (18) and an energy source, and the controller (15) of the load-handling manipulator (13) and the vehicle controller (18) exchange data bidirectionally in order to implement the predefined optimized packing pattern of the load-carrying device (6) with packages (4) in accordance with an order-picking route predefined by a control and evaluation device (3).

9. Order-picking robot (2) according to one of Claims 1 to 8, **characterized in that** the load-receiving device (18), in particular with the at least one intermediate storage space (20), is formed on the order-picking robot (2) as a separate trolley (24), which can be coupled to the order-picking robot (2).

10. Order-picking robot (2) according to one of Claims 1 to 9, **characterized in that** a control and evaluation device (3) is provided for generating an optimized order-picking route for the mobile order-picking robot (2) and for generating an optimized packing pattern from a large number of packages (4) relating to a stable load-carrying device (6) on a load-receiving device (18) for an order-picking order, with the aid of the at least one intermediate storage space (20) for the temporary intermediate storage of at least one package (4).

11. Method for operating a mobile order-picking robot (2) according to one of Claims 1 to 10, for removing packages (4) from a warehouse (5) and for packing the latter on a load-carrying device (6), wherein the order-picking robot (2) is formed with a load-handling manipulator (13), with a load-carrying means (14), which is arranged on the load-handling manipulator (13), with a controller (15) for the load-handling manipulator (13) and the load-carrying means (14), a load-receiving device (18) for receiving the load-carrying device (6), and with a control and evaluation device (3), **characterized in that** an optimized order-picking route for an order-picking order is produced by the control and evaluation device (3), and an optimized packing pattern of packages (4) on the load-carrying device (6) is produced, and the packages (4) of the order-picking order are stacked on the load-carrying device (6) by means of the load-handling manipulator (13) in accordance with the packing pattern.

12. Method according to the preceding Claim 11, **characterized in that** to pack the packing pattern, the at least one intermediate storage space (20) for the intermediate storage of at least one package (4) is considered and used.

13. Method according to the preceding Claim 12, **characterized in that** a package (4) is intermediately stored on the intermediate storage space (20) in order to pack another package (4) from another station, which is received later on the order-picking route, on the load-carrying device (6) and, after that, the package (4) gripped earlier and intermediately stored on the intermediate storage space (20) is packed onto the load-carrying device (6).

14. Method according to either of Claims 12 and 13, **characterized in that** a package (4) or a plurality of packages (4) are temporarily stored on the intermediate storage space (20) via a station or a plurality of stations for gripping individual packages (4), depending on the packing pattern generated.

15. Method according to one of the preceding Claims 12 to 14, **characterized in that** during the travel of the mobile order-picking robot (2) on the order-picking route, the packages (4) are packed and re-packed between at least one intermediate storage space (20) and the load-carrying device (6).

## Revendications

1. Robot de préparation de commandes mobile (2) permettant de prélever des colis (4) dans un entrepôt (5) et de les placer sur un dispositif porteur de charge (6), comprenant un manipulateur de manutention (13), un moyen porte-charge (14) pour saisir le colis (4), le moyen porte-charge (14) étant disposé sur le manipulateur de manutention (13), une commande (15) pour le manipulateur de manutention (13) et le moyen porte-charge (14), et un dispositif de levage (18) pour soulever le dispositif porteur de charge (6), dans lequel au moins un emplacement de stockage intermédiaire (20) est réalisé pour le stockage intermédiaire temporaire d'au moins un colis (4) à proximité du ou sur le robot de préparation de commandes (2),
**caractérisé en ce que** le robot de préparation de commandes (2) est réalisé de telle sorte qu'un colis (4) déjà prélevé dans l'entrepôt (5) pour une mise en place ultérieure sur un autre colis à préparer ultérieurement est déposé et temporairement mis en stockage intermédiaire à l'emplacement de stockage intermédiaire (20) du robot de préparation de commandes mobile (2) au moyen du manipulateur de manutention (13), et des colis soulevés ultérieurement sur le chemin de préparation de commandes sont placés en premier sur le dispositif porteur de charge (6) avant que le colis (4) déposé à l'emplacement de stockage intermédiaire (20) ne soit placé sur le dispositif porteur de charge (6) au moyen du manipulateur de manutention (13).

2. Robot de préparation de commandes (2) selon la revendication 1, **caractérisé en ce que** le robot de préparation de commandes (3) est réalisé de telle sorte que selon un schéma de mise en place optimisé des colis (4) sur le dispositif porteur de charge (6), prédéfini pour un ordre de préparation de commandes, les colis (4) de l'ordre de préparation de commandes sont empilés sur le dispositif porteur de charge (6) au moyen du manipulateur de manutention (13).

3. Robot de préparation de commandes (2) selon la revendication 1 ou 2, **caractérisé en ce que** pour le stockage intermédiaire d'au moins un colis (4), ledit au moins un emplacement de stockage intermédiaire (20), de préférence deux, de plus grande préférence trois emplacements de stockage intermédiaire (21, 22), sont disposés et réalisés, en particulier latéralement, à côté du manipulateur de manutention (13) et/ou autour du dispositif porteur de charge (6) et/ou autour du manipulateur de manutention (13).

4. Robot de préparation de commandes (2) selon l'une quelconque des revendications 1 à 3, **caractérisé en ce que** l'emplacement de stockage intermédiaire (20) est disposé sur le côté opposé au dispositif de levage (18) par rapport au manipulateur de manutention (13) disposé au centre entre ceux-ci.

5. Robot de préparation de commandes (2) selon l'une quelconque des revendications 1 à 4, **caractérisé en ce que** ledit au moins un emplacement de stockage intermédiaire (20) est disposé au-dessus du dispositif de levage (18), en particulier fixé à des montants légers et à des rails.

6. Robot de préparation de commandes (2) selon l'une quelconque des revendications 1 à 5, **caractérisé en ce que** ledit au moins un emplacement de stockage intermédiaire (20) est réalisé de façon à mettre en stockage intermédiaire au moins un colis (4), de préférence plusieurs colis (4), audit au moins un emplacement de stockage intermédiaire (20).

7. Robot de préparation de commandes (2) selon l'une quelconque des revendications 1 à 6, **caractérisé en ce que** ledit au moins un emplacement de stockage intermédiaire (20 ; 21 ; 22) est muni d'un dispositif de pivotement et/ou de basculement.

8. Robot de préparation de commandes (2) selon l'une quelconque des revendications 1 à 7, **caractérisé en ce que** le robot de préparation de commandes (2) comprend un entraînement de conduite autonome (16) pourvu d'une commande de véhicule autonome (18) et d'une source d'énergie, et la commande (15) du manipulateur de manutention (13) et la commande de véhicule (18) sont en échange de données bidirectionnel afin de mettre en oeuvre le schéma de mise en place optimisé prédéfini du dispositif porteur de charge (6) avec des colis (4) selon un chemin de préparation de commandes prédéfini par un dispositif de commande et d'évaluation (3).

9. Robot de préparation de commandes (2) selon l'une quelconque des revendications 1 à 8, **caractérisé en ce que** le dispositif de levage (18), en particulier avec ledit au moins un emplacement de stockage intermédiaire (20), est réalisé par rapport au robot de préparation de commandes (2) sous la forme d'un chariot séparé (24) qui peut être couplé au robot de préparation de commandes (2).

10. Robot de préparation de commandes (2) selon l'une quelconque des revendications 1 à 9, **caractérisé en ce qu'**un dispositif de commande et d'évaluation (3) est prévu pour générer un chemin de préparation de commandes optimisé pour le robot de préparation de commandes mobile (2) et pour générer un schéma de mise en place optimisé à partir d'une pluralité de colis (4) jusqu'à un dispositif porteur de charge stable (6) sur un dispositif de levage (18) pour un ordre de préparation de commandes à l'aide du au moins un emplacement de stockage intermédiaire (20) pour un stockage intermédiaire temporaire d'au moins un colis (4) .

11. Procédé permettant de faire fonctionner un robot de préparation de commandes mobile (2) selon l'une quelconque des revendications 1 à 10, afin de prélever des colis (4) dans un entrepôt (5) et de les placer sur un dispositif porteur de charge (6), dans lequel le robot de préparation de commandes (2) est réalisé avec un manipulateur de manutention (13), avec un moyen porte-charge (14) qui est disposé sur le manipulateur de manutention (13), avec une commande (15) pour le manipulateur de manutention (13) et le moyen porte-charge (14), un dispositif de levage (18) servant à soulever le dispositif porteur de charge (6), et avec un dispositif de commande et d'évaluation (3),
**caractérisé en ce que** le dispositif de commande et d'évaluation (3) génère un chemin de préparation de commandes optimisé pour un ordre de préparation de commandes, et génère un schéma de mise en place optimisé des colis (4) sur le dispositif porteur de charge (6), et empile les colis (4) de l'ordre de préparation de commandes sur le dispositif porteur de charge (6) au moyen du manipulateur de manutention (13) selon le schéma de mise en place.

12. Procédé selon la revendication précédente 11, **caractérisé en ce que** pour la mise en place du schéma de mise en place, ledit au moins un emplacement de stockage intermédiaire (20) est pris en compte et utilisé pour le stockage intermédiaire d'au moins un colis (4).

13. Procédé selon la revendication précédente 12, **caractérisé en ce qu'**un colis (4) est mis en stockage intermédiaire à l'emplacement de stockage intermédiaire (20) afin de placer sur le dispositif porteur de charge (6) un autre colis (4) d'une autre station qui est soulevé ultérieurement sur le chemin de préparation de commandes, et ensuite, le colis (4) saisi plus tôt, mis en stockage intermédiaire à l'emplacement de stockage intermédiaire (20), est placé sur le dispositif porteur de charge (6).

14. Procédé selon l'une quelconque des revendications 12 ou 13, **caractérisé en ce qu'**un colis (4) ou plusieurs colis (4) sont mis en stockage intermédiaire à l'emplacement de stockage intermédiaire (20) par l'intermédiaire d'une station ou de plusieurs stations servant à saisir des colis individuels (4) en fonction du schéma de mise en place généré.

15. Procédé selon l'une quelconque des revendications précédentes 12 à 14, **caractérisé en ce que** pendant le déplacement du robot de préparation de commandes mobile (2) sur le chemin de préparation de commandes, les colis (4) sont placés et replacés entre au moins un emplacement de stockage intermédiaire (20) et le dispositif porteur de charge (6).
